# EUROPEAN PATENT APPLICATION

(11) **EP 1 124 196 A2**
(43) Date of publication of application: **16.08.2001**
(21) Application number: 01301060.8
(22) Date of filing: 07.02.2001
(51) Int. Cl.: G06F 17/60

(54) **Web-based equipment sales and service network and method**

(30) Priority: 11.02.2000 US 502819
(71) Applicant: GENERAL ELECTRIC COMPANY, Schenectady, NY 12345 (US)
(72) Inventor: Kliman, Gerald Burt, Niskayuna, New York 12309 (US); Rao, Kotesh Kummamuri, Clifton Park, New York 12065 (US); Ghosh, Asish, Slingerlands, New York 12159 (US); Shah, Manoj Ramprasad, Lathem, New York 12110 (US); Koegl, Rudolph Alfred Albert, Niskayuna, New York 12309 (US)
(74) Representative: Goode, Ian Roy

(57) **Abstract**

An electric equipment sales and service network (12) includes a web service (18) including a web-based interface (20) for receiving requirements (16) from customers (14); links to provider (32,34,36) databases; and a configuration manager (22) for using the requirements and at least one of the provider databases to generate customized web-accessible solutions (38) for respective customers.

## Description

The invention relates generally to sales, services, maintenance, and configuration of electric equipment.

Commonly assigned Kliman et al., "ELECTRIC EQUIPMENT SERVICING METHOD AND SYSTEM," US Application No. 09/442,047, filed 16 November 1999, describes a method for selling technical equipment and service agreements over a network including: providing at least one screen accessible at remote interfaces including inquiry, order, and service agreement options; and receiving inquiry, order, and service agreement requests in response to the inquiry, order and service agreement options and processing the inquiry, order, and service agreement requests using an integrated digital engineering system including equipment design tools, quality tools, and diagnostic tools. Aforementioned Kliman et al., US Application No. 09/442,047, further describes an electric equipment servicing method for providing information to customers through a remote interface that includes: receiving digital technical and payment data from a customer at a remote interface; transferring the technical and payment data from the remote interface to a data processing system including at least one database for storage of the technical data; evaluating the data; transmitting digital information regarding the technical data to the remote interface; and using the payment data to obtain payment for the transmitted digital information. Kliman et al., US Application No. 09/442,047, was primarily directed to forming sales and service relationships between the customer, a network operator, and, optionally, approved local service providers.

It would further be desirable to provide a more comprehensive offering of information, sales, repair, and support for electric equipment.

In one embodiment of the present invention, a customer centric, enterprise service provider has a web site with links to the entire global supply chain from electric equipment manufacturers to service with some access being provided for no charge and other access being provided for nominal charges. The web site can be used as a "one stop" global shop for all electric equipment needs, including sales of new and used electric equipment, services of electric equipment, application development using electric equipment, and remote electric equipment monitoring and diagnostics.

In another embodiment of the present invention, a sales and service network includes a web service including a web-based interface for receiving requirements from customers; links to provider databases; and a configuration manager for using the requirements and at least one of the provider databases to generate web-accessible customized solutions and to provide collaborative and multi-modal access to information.

The features of the invention believed to be novel are set forth with particularity in the appended claims. The invention itself, however, both as to organization and method of operation, together with further objects and advantages thereof, may best be understood by reference to the following description taken in conjunction with the accompanying drawings, where like numerals represent like components, in which:

**FIG. 1** is an example web site for use in accordance with an embodiment of the present invention.

**FIG. 2** is an example block diagram for use in accordance with an embodiment of the present invention.

**FIG. 3** is a flowchart illustrating the flow of the information through a common gateway to the databases and the outflow of multi-modal data to the customer.

**FIG. 4** is a flowchart illustrating a method for processing a typical customer inquiry.

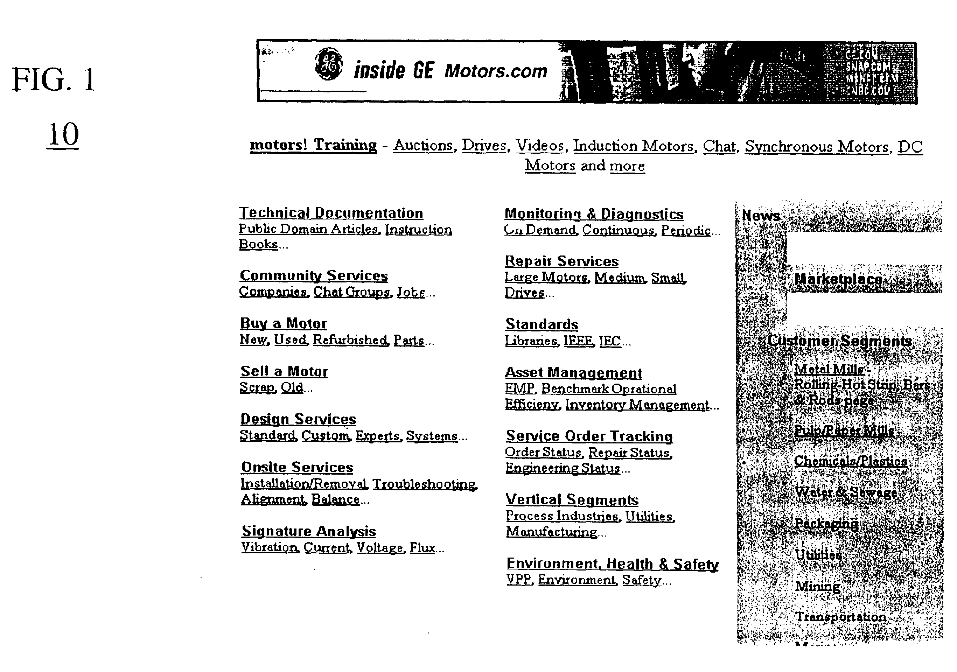

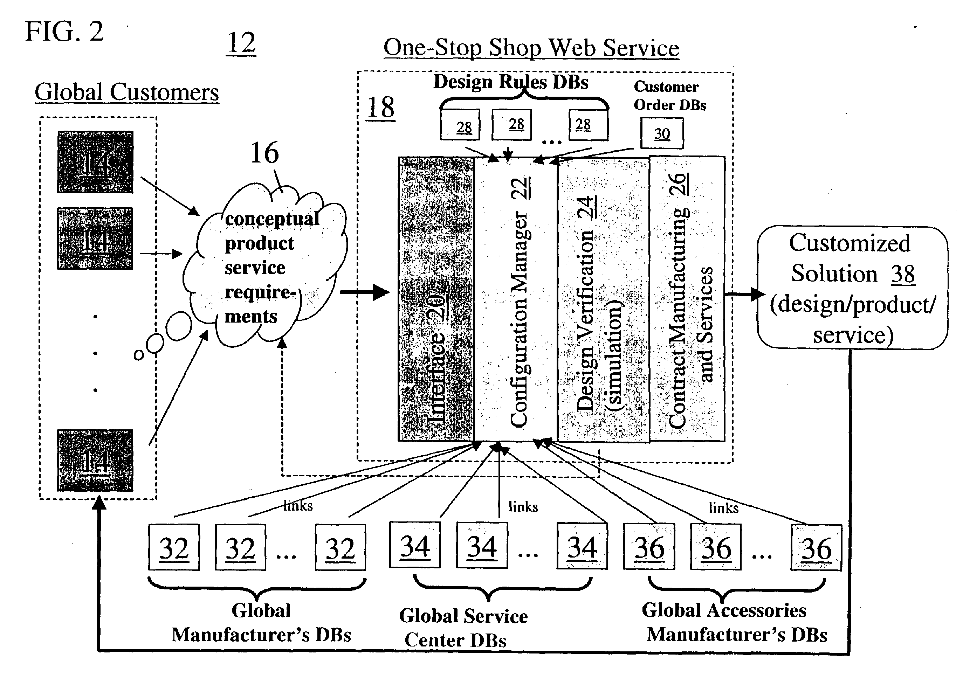

**FIG. 1** is an example web site 10, and **FIG. 2** is an example block diagram. In one embodiment of the present invention, an electric equipment sales and service network 12 comprises a web service 18 including: (a) a web-based interface 20 for receiving requirements 16 from customers 14; (b) links to provider databases 32, 34, 36; and (c) a configuration manager 22 for using the requirements and at least one of the provider databases to generate customized solutions 38 for viewing on the web-based interface. Network 12 operates web site 10. Web site 10 may be accessible directly or via links from third party sites, such as, for example, provider and/or customer sites.

Using present technology, the web-based interface can be enabled via web sites on the Internet (not shown). The present invention is intended to encompass other mediums than the Internet, however, particularly in the event that another form of standardized digital communication evolves. "Web service" is meant to include networking services that enable remote sharing of information, and "web-based interface" is meant to include at least one interface used by such networking services. Web-based interfaces may comprise network-operated computers as well as customer-operated computers each of which may include multi-modal interfaces such as desktop, laptop, palmtop, portable and/or wearable computers, cell phones, and/or other wireless appliances, for example.

"Electric equipment" is intended broadly herein to refer to electric, electronic, electrical, and/or electromechanical equipment such as, for example, an electric apparatus or machine, a drive system for an electric machine, any other equipment used for control, such as, for example, circuit breakers, or other electric equipment such as switchgear or a transformer. References to "motors" in FIG. 1 are for purposes of example only.

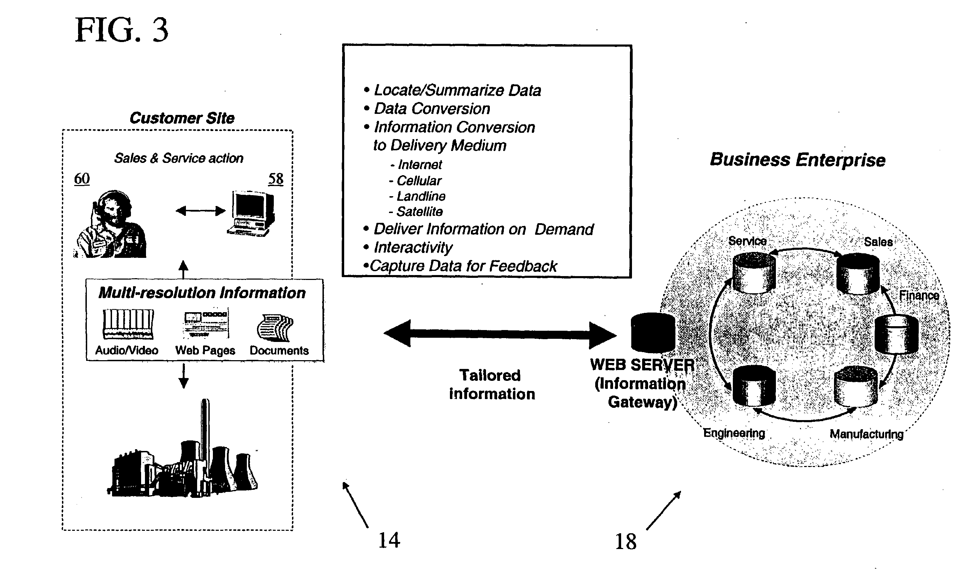

Using a web-based interface facilitates access by customers 14 from around the globe as well as from a manufacturing plant floor. "Customer" is meant to broadly include users of the web-based interface whether they are seeking to purchase, sell, or obtain information relating to products or services. FIG. 3 captures an embodiment wherein multiple databases which form the core of web service 18 are accessible and provide tailored information of appropriate bandwidth and resolution to the customer 14 in need of sales or service. Appropriate resolution and bandwidth will depend on the mode of interface(s) 20 (shown as computers 58 and 60 in FIG. 3).

Provider databases 32, 24, 36 may represent global providers of sales, services, engineering and manufacturing information. As shown in FIG. 2, for example, by global electric equipment manufacturer's databases 32, global service center databases 34, and global accessories Manufacturer's databases 36, the providers may include manufacturers and service centers. In some circumstances a provider can also be a customer.

Requirements 16 from customers 14 can include menu-selected options or data streams such as free-text data, drawings, graphs, waveforms, or configuration settings, for example. Requirements 16 from customers 14 may include product requirements, transportation requirements, service requirements, maintenance requirements, design requirements, emergency requirements, and/or informational requirements, for example. Customized solutions 38 will typically fall into categories corresponding to the requirements 16. For example, if a customer has transportation requirements, in one embodiment a customized solution can be obtained using the process described in commonly assigned Sinha et al, "METHOD AND SYSTEM FOR TRACKING GOODS OVER MULTIPLE TRANSPORTATION CARRIER CHANNELS," US Patent Application No. (Assignee's docket number RD-27728), filed 8 February 2000, which discloses methods for tracking goods over multiple transportation carrier channels. As another example, if a large electrical apparatus fails and requires immediate replacement, arrangements for the shipment and installation of new equipment can be deployed via web-based service 18 which is adapted to coordinate the various organizations needed to perform the service, such as by arrangement for rail services and removal/install engineering services.

Requirements 16 may additionally include requirements that are identified by any of the web service 18 support elements (shown, for example, as interface 20, configuration manager 22, design verification (simulation) 24, and contract manufacturing and services 26). In one embodiment, design verification 24 is used to confirm that the solution recommended by the configuration manager conforms with the customer requirements, and contract manufacturing and services 26 is used to execute the solution developed by the configuration manager and identify any implementation problems.

Web service 18 may further include design rule databases 28 and/or customer order databases 30 for use by configuration manager 22. As described in aforementioned Kliman et al., US Application No. 09/442,047, in one embodiment, customer databases includes specific customer databases with data regarding specific customers and a global customer database with data gathered from a number of sources such as internal tests and other customers. Data of individual customers can be maintained privately and not shared with other customers or users by keeping the collective information in the global database for use by configuration manager 22.

In one embodiment configuration manager 22 generates displays showing selected relevant portions of requirements 16 and solutions 38 respectively viewable by customers and providers. The level of access and information viewable on a specific display can be designed to vary according to customer and provider preferences.

For example, in one embodiment configuration manager 22 is adapted to request and receive bids from the providers and to use the bids to generate the customized solutions. The request can take one or more of a number of forms. In one embodiment, the customer requirement is posted on a web site that can be accessed by any user. In another embodiment, the customer requirement is posted on a web site that is only accessible by web service 18 or customer 14 approved providers. In another embodiment, the customer requirement information is sent to an e-mail or web site of the approved providers. For each of these embodiments, the customer might elect to show or not show a customer name with the requirement information to be viewed by providers.

In another example, providers may elect to keep bid, capacity, and other provider information secure or to make the information available to approved customers or to the general public.

In particular, customers 14 are expected to desire access to inventory levels of the providers. Inventory levels can be used either by the configuration manager or the customer directly for intelligent supply change management. If network 12 has connectivity to planning software, the network can anticipate what types and levels of customer orders will be generated. By adapting the configuration manager to use the customer requirements for demand forecasting in this manner, information can additionally be supplied to providers to help the providers with scheduling and with planning inventories, for example. In this context the provider can be viewed as a customer. The demand forecasting information can be supplied with or without charge.

In one embodiment, the requirements and customized solutions include monitoring and diagnostic services. These services may include repair, screening, and maintenance services similar to that described in aforementioned Kliman et al., US Application No. 09/442,047, for example.

In another embodiment, the requirements and customized solutions include application engineering assistance. Application engineering assistance is useful because typically a customer has certain performance requirements for electrical equipment that must be transformed into component specifications. Sometimes support for transformation of performance requirements into the specification is provided by equipment sales people who have limited access to design software via laptops. Sometimes the customer prefers to develop the specification. Either way, due to the recognized lack of expertise, customers frequently use a lot of extra margin in their calculations and thus end up with equipment that is larger, more expensive, and requires more energy than necessary to meet the performance requirements. To more efficiently develop a specification, some customers hire consultants. Much of the information used by consultants can be economically provided by an intelligent on-line system. A neutrally-designed system can remove elements of sales pressure.

In another embodiment, the requirements and customized solutions include text based advice (such as diagnostic, application, and/or design advice). E-mail parsing systems are now available from several software vendors. Such techniques can be applied to unstructured web-based inquiries about electric equipment malfunction, ordering, and applications, for example. Equipment faults can be structured by a FMEA (failure mode and effect analysis) for the particular type of electric equipment. The analysis can be facilitated by providing contracted customers with a form to fill out either on paper or on-line in a text or a web page format. Then tree structures, Bayesian Belief networks or other artificial intelligence techniques can be applied to point at high probability root causes and recommended actions, for example.

Network 12 can be operated using any one or more of a number of payment systems. For example, certain access can be provided for no charge with other levels access can be provided for nominal charges based on either per usage or per term charges. Additionally, if external links on the network result in charges to the network, these charges can be passed through to the customer or provider as appropriate.

The present invention, although broadly applicable, is particularly useful in the context of electric equipment such as electric motors, generators, switchgear, transformers, and drive systems. As discussed above, often times electric equipment is designed to be larger, more expensive, and less energy efficient than needed for a particular application. By accessing a comprehensive network with links to multiple provider databases, customized solutions can be generated in an impartial manner using more information than is conventionally accessible.

Embodiments of the present invention thus can be used to provide a customer centric, enterprise service provider web site (with links to an entire global supply chain) that can be used as a "one stop" global shop for all electric equipment needs, including sales of new and used electric equipment, services of electric equipment, application development using electric equipment, and remote electric equipment monitoring and diagnostics.

### EXAMPLE:

A customer needs electrical equipment and has requirements relating to design, layout, ordering, and installation. Key questions that the customer might ponder include, for example: what equipment is needed; what existing infrastructure is affected; what is involved in installation; what impact and value might result from the equipment's performance; and what will the solution cost.

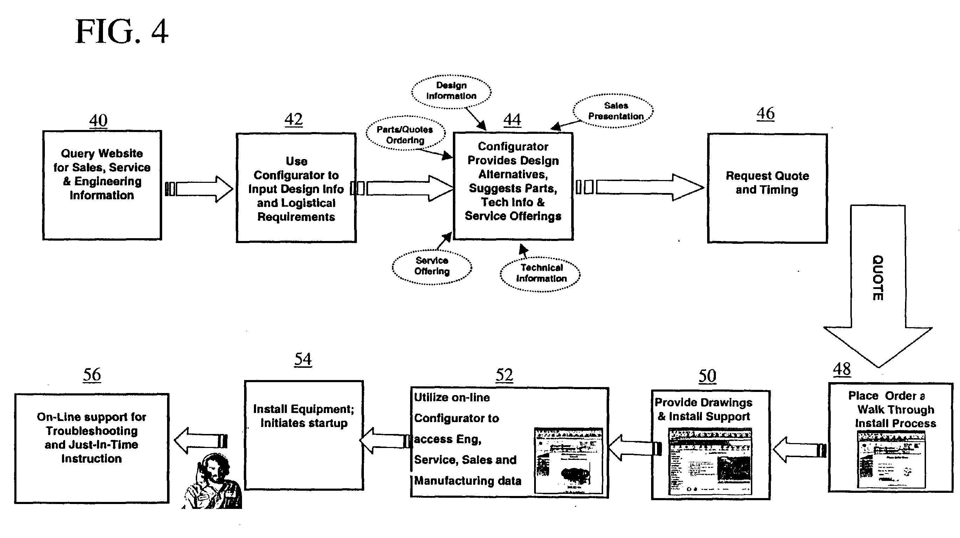

Referring to FIG. 4, a flowchart is used to illustrate processing of the customer inquiry. At step 40, the customer queries Web site 10 (shown, for example, in FIG. 1) for sales, service, and engineering information - each of which may be provided with or without charge. At step 42, the customer provides requirements 16 (shown in FIG. 2) which include design and logistics requirements. Having an interactive configuration manager 22 (FIG. 2) can be useful in the process for providing requirements. For example, the configuration manager can use information provided by the customer to best determine appropriate follow-up queries for obtaining all the information needed to analyze the requirements.

At step 44, web service 18 (FIG. 2) provides design alternatives (along with part information), technical information offerings, and service offerings which are then used by the customer to request a quote and timing at step 46.

At step 48 the customer places an order and provides any remaining information needed for beginning the installation process. Web service 18 provides drawings and installation support at step 50 and uses one or more configuration managers with access to engineering, sales, and manufacturing data to provide the equipment and installation solutions at step 52. At step 54, installation can be performed by or for the customer using the information provided by the Web service. Following installation, on-line support for trouble-shooting and just-in-time instruction can be provided at step 56.

Throughout the process it is useful to provide multi-modal and multi-resolution data flow. Such data flow is a tremendous benefit in an industrial environment for which installation can be challenging. An engineer or technician can initiate the inquiry process at one computer (shown as computer 58 in FIG. 3) but may eventually need to install, debug, troubleshoot, and maintain the equipment on an industrial plant floor where a tethered computer is not accessible.

In one embodiment, once a service sequence is initiated, the information flow can continue even while the customer is standing in front of the equipment and needs to extract specific instruction sequences or transmit error codes to network 12. Portable computers (shown as computer 60 in FIG. 3) can be linked to the network and/or to the customer's fixed computers. In particular, use of wearable computers, such as headsets, provides the engineer or technician access to the information flow in tight or awkward spaces.

If desired, information flow can additionally provide collaborative access to information. In one embodiment, for example, a technician wears a headset on the plant floor while an engineer is working on a remote computer with both having access to each other's shared data and either or both having direct access to the network.

For completeness, various aspects of the invention are set out in the following numbered clauses:-
1. A sales and service network comprising a web service including:
   (a) a web-based interface for receiving requirements from customers;
   (b) links to provider databases; and
   (c) a configuration manager for using the requirements and at least one of the provider databases to generate web-accessible customized solutions.
2. The network of clause 1 wherein the configuration manager generates multi-modal and multi-resolution displays having selected relevant portions of requirements and solutions respectively viewable by customers and providers.
3. The network of clause 2 wherein the configuration manager is adapted to request and receive bids from the providers and to use the bids to generate the customized solutions.
4. An electric equipment sales and service network comprising a web service including:
   (a) a web-based interface for receiving requirements from customers;
   (b) links to manufacturer provider databases and service center provider databases; and
   (c) a configuration manager for using the requirements and at least one of the manufacturer and service center provider databases to generate web-accessible customized electric equipment solutions.
5. The network of clause 4 wherein the configuration manager generates displays having selected relevant portions of requirements and solutions respectively viewable by customers and providers.
6. The network of clause 5 wherein the relevant portions include inventory levels.
7. The network of clause 4 wherein the configuration manager is adapted to request and receive bids from the providers and to use the bids to generate the customized solutions.
8. The network of clause 4 wherein the requirements include menu-selected options or data streams.
9. The network of clause 4 wherein the configuration manager is further adapted to use the customer requirements for demand forecasting.
10. The network of clause 4 wherein the customized solutions include transportation services.
11. The network of clause 4 wherein the requirements and customized solutions include monitoring and diagnostic services.
12. The network of clause 11 wherein the monitoring and diagnostic services include maintenance scheduling.
13. The network of clause 4 wherein the requirements and customized solutions include application engineering assistance.
14. The network of clause 4 wherein the requirements and customized solutions include text based advice.
15. The network of clause 4 wherein the web-based interface comprises a multi-modal interface.
16. The network of clause 15 wherein the multi-modal interface comprises a desktop computer or a portable computer.
17. The network of clause 4 wherein the electric equipment is a motor, a generator, a drive system, a circuit breaker, switchgear, or a transformer.
18. A method for sales and service comprising :
   receiving requirements from customers over a web-based interface;
   using the requirements and at least one of a plurality of links to provider databases to generate customized solutions ; and
   generating multi-modal and multi-resolution displays having selected relevant portions of requirements and solutions respectively viewable by customers and providers.
19. A method for electric equipment sales and service comprising:
   receiving requirements from customers over a web-based interface;
   using the requirements and at least one of a plurality of links to manufacturer provider databases and service center provider databases to generate web-accessible customized electric equipment solutions for respective customers.
20. The method of clause 19 further including generating displays having selected relevant portions of requirements and solutions respectively viewable by customers and providers.
21. The method of clause 20 wherein the requirements and customized solutions include installation information.
22. The method of clause 20 further including providing the displays to multi-modal interfaces.
23. The method of clause 22 wherein the multi-modal interfaces include at least one portable computer.
24. A method for sales and installation of electric equipment comprising: receiving electric equipment and installation requirements from a customer over a multi-modal web-based interface;
   using the requirements to generate at least one customized solution ;
   receiving an order from the customer;
   providing electric equipment manufacturing and installation support over the multi-modal web-based interface.
25. The method of clause 24 wherein using the requirements to generate the at least one customized solution includes acquiring data from at least one of a plurality of links to manufacturer provider databases and using the data and the requirements to generate the at least one customized solution.
26. The method of clause 25 wherein providing electric equipment manufacturing and installation support over the multi-modal web-based interface includes generating displays having selected relevant portions of requirements and solutions respectively viewable by customers and providers.
27. The method of clause 24 wherein the multi-modal interface include at least one portable computer.

## Claims

1. A sales and service network (12) comprising a web service (18) including:
(a) a web-based interface (20) for receiving requirements (16) from customers (14);
(b) links to provider (32,34,36) databases; and
(c) a configuration manager (22) for using the requirements and at least one of the provider databases to generate web-accessible customized solutions (38).

2. An electric equipment sales and service network (12) comprising a web service (18) including:
(a) a web-based interface (20) for receiving requirements (16) from customers (14);
(b) links to manufacturer provider databases (32,36) and service center provider databases (34); and
(c) a configuration manager (22) for using the requirements and at least one of the manufacturer and service center provider databases to generate web-accessible customized electric equipment solutions (38).

3. The network of claim 1 or claim 2 wherein the configuration manager generates displays having selected relevant portions of requirements and solutions respectively viewable by customers and providers.

4. The network of claim 1 or claim 2 wherein the configuration manager is adapted to request and receive bids from the providers and to use the bids to generate the customized solutions.

5. A method for sales and service comprising :
receiving requirements (16) from customers (14) over a web-based interface (20);
using the requirements and at least one of a plurality of links to provider (32,34,36) databases to generate customized solutions (38); and
generating multi-modal and multi-resolution displays having selected relevant portions of requirements and solutions respectively viewable by customers and providers.

6. A method for electric equipment sales and service comprising:
receiving requirements (16) from customers (14) over a web-based interface (20);
using the requirements and at least one of a plurality of links to manufacturer provider databases (32,36) and service center provider databases (34) to generate web-accessible customized electric equipment solutions (38) for respective customers.

7. The method of claim 6 further including generating displays having selected relevant portions of requirements and solutions respectively viewable by customers and providers.

8. A method for sales and installation of electric equipment comprising:
receiving electric equipment and installation requirements (16) from a customer (14) over a multi-modal web-based interface (20);
using the requirements to generate at least one customized solution (38);
receiving an order from the customer;
providing electric equipment manufacturing and installation support over the multi-modal web-based interface.

9. The method of claim 8 wherein using the requirements to generate the at least one customized solution (38) includes acquiring data from at least one of a plurality of links to manufacturer provider databases (32,36) and using the data and the requirements to generate the at least one customized solution.

10. The method of claim 8 wherein the multi-modal interface include at least one portable computer.
